# EUROPÄISCHE PATENTSCHRIFT

(11) **EP 1 547 423 B1**
(45) Veröffentlichungstag und Bekanntmachung des Hinweises auf die Patenterteilung: **08.11.2006**
(21) Anmeldenummer: 03756443.2
(22) Anmeldetag: 29.09.2003
(51) Int. Cl.: H04Q 7/38, H04Q 7/32

(54) **VERFAHREN ZUR BEREITSTELLUNG VON BETREIBERSPEZIFISCHEN LEISTUNGSMERKMALEN UNTERSCHIEDLICHER MOBILFUNKNETZBETREIBER FÜR EINEN MOBILFUNKKUNDEN**
METHOD FOR THE PROVISION OF OPERATOR-SPECIFIC PERFORMANCE FEATURES OF DIFFERENT MOBILE RADIO NETWORK OPERATORS FOR A MOBILE RADIO CUSTOMER
PROCEDE DE MISE EN OEUVRE DE CARACTERISTIQUES DE PERFORMANCE SPECIFIQUES AUX FOURNISSEURS DE DIVERS RESEAUX DE TELEPHONIE MOBILE POUR UN CLIENT DE TELEPHONIE MOBILE

(30) Priorität: 30.09.2002 DE 10245846
(43) Veröffentlichungstag der Anmeldung: 29.06.2005
(73) Patentinhaber: T-Mobile Deutschland GmbH, 53227 Bonn (DE)
(72) Erfinder: SCHMITT, Harald, 56170 Bendorf (DE)
(74) Vertreter: Riebling, Peter
(86) Internationale Anmeldenummer: PCT/DE2003/003251
(87) Internationale Veröffentlichungsnummer: WO 2004/032545

(56) Entgegenhaltungen:
- EP-A- 0 344 989
- WO-A-01/28205
- WO-A-02/21872
- WO-A-99/27724
- WO-A-99/62282
- GB-A- 2 338 862

## Beschreibung

Die Erfindung betrifft ein Verfahren zur Bereitstellung von betreiberspezifischen Leistungsmerkmalen unterschiedlicher Mobilfunknetzbetreiber für einen Mobilfunkkunden, nach dem Oberbegriff des Patentanspruchs 1.

Über das sogenannte nationale und internationale Roaming ist es Kunden moderner Mobilfunknetze, wie z.B. GSM und UMTS, möglich, in anderen Ländern und bei anderen Netzbetreibern Leistungen des jeweiligen "fremden" Mobilfunknetzes zu nutzen. Jedoch sind beim Roaming die für einen Kunden nutzbaren Leistungsmerkmale im Fremdnetz auf die im Heimatnetz freigeschalteten Leistungsmerkmale beschränkt. Dies wird hervorgerufen dadurch, dass beim Roaming die für den Mobilfunkkunden freigeschalteten Leistungsmerkmale aus der sogenannten Heimatdatenbank des Heimatnetzes abgefragt werden, und anhand dieser Berechtigungen die Leistungsmerkmale im Fremdnetz für den Kunden bereitgestellt werden.
Dadurch ist es nicht möglich im Fremdnetz zusätzliche Leistungsmerkmale zu nutzen, welche im Heimatnetz nicht zur Verfügung stehen und somit auch nicht für den Kunden freigeschaltet sind.

Ein weiterer Nachteil des Roamings ist, dass ein Mobilfunkkunde im Fremdnetz nur unter seiner internationalen Mobilfunkrufnummer des Heimatnetzes erreichbar ist. Dadurch muss ein Anrufer im Land des Fremdnetzes immer die internationale Heimatnummer des Mobilfunkkunden benutzen, obwohl der Mobilfunkkunde im gleichen Land verweilt. Weiterhin werden dem Anrufer Gebühren für Auslandstelefonate in Rechnung gestellt, obwohl sich der Mobilfunkkunde im gleichen Land aufhält.

Entsprechend den Merkmalen des Oberbegriffs des Anspruchs 1 offenbart die WO 02 21872 ein Verfahren zum Bereitstellen von netzbetreiberspezifischen Leistungsmerkmalen unterschiedlicher Mobilfunknetzbetreiber für einen Mobilfunkkunden, wobei der Mobilfunkkunde über eine Smart Card verfügt, auf der ein Teilnehmerverhältnis des Mobilfunkkunden in Bezug auf einen Mobilfunknetzbetreiber definiert ist. Hierbei sind auf der Smart Card des Mobilfunkkunden mindestens zwei Teilnehmerverhältnisse mit unterschiedlichen Mobilfunkrufnummem und voneinander unabhängigen Leistungsmerkmalen definiert, und jedes Teilnehmerverhältnis ist jeweils einem Mobilfunknetzbetreiber.
Ein ähnliches Verfahren und System ist aus WO 99 62282 bekannt. Bei diesem Verfahren sind mehrere Teilnehmerverhältnisse bei einem Mobilfunknetzbetreiber vorgesehen. Es ist nicht offenbart, zwei oder mehrere Teilnehmerverhältnisse jeweils verschiedenen Mobilfunknetzbetreibern zuzuordnen.
EP 0 344 989 A2 betrifft ein mobiles Kommunikationsendgerät, bei dem mehrere Identifikationsnummern jeweils unterschiedlicher Basisstationen eines Mobilfunknetzbetreibers gespeichert sind. Damit ist es möglich, im Sendegebiet jeder dieser Basisstationen Gespräche zu senden und zu empfangen. Unterschiedliche Teilnehmerverhältnisse bei unterschiedlichen Mobilfunknetzbetreibern sind nicht vorgesehen.
GB 2 338 862 A offenbart ein sogenanntes Unified Messaging System, das es ermöglicht, Nachrichten zwischen verschiedenen Netzknoten zu übermitteln. Ein Benutzer des Systems kann eine für ihn bestimmte Nachricht über jeden Netzknoten abrufen.
WO 99 27724 A1 betrifft ein Verfahren zur Nachrichtenverteilung und -speicherung in einem zellularen Mobilkommunikationsnetz. Es ist vorgesehen, dass ein Benutzer unabhängig von seinem Aufenthaltsort Zugriff auf eine für ihn eingegangene Nachricht erhält. Ein Verfahren mit ähnlichem Hintergrund ist in WO 01 28205 A2 offenbart.

Es ist Aufgabe der Erfindung, ein Verfahren anzugeben, durch welches einem Mobilfunkkunden Leistungsmerkmale in einem Fremdnetz zur Verfügung gestellt werden können, die in seinem Heimatnetz nicht verfügbar sind.
Eine weitere Aufgabe der Erfindung ist es, ein Verfahren anzugeben, durch welches Mobilfunkkunden in Fremdnetzen unter nationalen Rufnummern erreichbar sind, und somit für Anrufer aus dem Fremdnetz keine internationalen Gesprächsgebühren anfallen.

Diese Aufgaben werden erfindungsgemäß durch die Merkmale des Patentanspruchs 1 gelöst.

Das erfindungsgemäße Verfahren sieht vor, für jedes gewünschte Mobilfunknetz ein eigenes Teilnehmerverhältnis, das heißt eine eigene Subskription des Mobilfunkkunden, zu erstellen. Dadurch erhält der Mobilfunkkunde in jedem gewünschten Mobilfunknetz eine eigene netzspezifische Identifikation (Mobilfunkrufnummer). Dies wird dadurch erreicht, dass auf einer Smart Card des Mobilfunkkunden für jedes gewünschte Netz eine eigene SIM- (Subscriber Identity Modul) bzw. USIM- (UMTS Subscriber Identity Modul) Applikation aufgebracht wird. Der Kunde hat somit nur eine Smart Card mit mehreren logischen, netzspezifischen SIMs. Entsprechend der netzspezifischen SIM ist für den Mobilfunkkunden in jedem Netz ein eigenes Teilnehmerprofil im HLR (Home Location Register) vorzusehen. Da der Mobilfunkkunde in jedem Netz dadurch individuell administrierbar ist, können für den Kunden in jedem Mobilfunknetz spezifische Leistungsmerkmale verwaltet werden. Durch diese Maßnahme können für einen Kunden verschiedene Berechtigungen je nach dem momentan verwendeten Netz vorgesehen werden.

Ein Mobilfunkkunde hat somit im Netz A eine Identifikation (Rufnummer) A und dadurch für das Netz A spezifische Berechtigungen (Leistungsmerkmale) A. Für das Netz B hat der Kunde die Identifikation B und die Berechtigungen B, usw.

In einer Weiterbildung des Verfahrens sieht die Erfindung vor, dass immer die dem verwendeten Mobilfunknetz entsprechende Identifikation (Rufnummer) des Mobilfunkkunden aktiv ist, die vom Mobilfunkkunden entweder manuell ausgewählt oder automatisch in Abhängigkeit des aktuellen Aufenthaltsortes des Mobilfunkkunden aktiviert wird. Es ist immer die Identifikation (Rufnummer) des aktuell verwendeten Netzes aktiv. Dies kann z.B. durch automatische Algorithmen auf der jeweiligen Smart Card erreicht werden, welche die momentan notwendige SIM Applikation starten. Durch diese Maßrahme ist sichergestellt, dass immer die Berechtigungen des momentan verwendeten Netzes zur Anwendung kommen.

Befindet sich der Kunde in Netz A, so ist die Identifikation des Netzes A aktiv und somit die Berechtigungen des Netzes A. Im Netz B ist die Identifikation des Netzes B mit den Berechtigungen B aktiv, usw.

Erfindungsgemäß ist es durch netzseitige Lösungen vorgesehen, die einzelnen netzspezifischen Rufnummern des Mobilfunkkunden zusammenzuführen, in der Art, dass der Mobilfunkkunde zu jeder Zeit unter jeder netzspezifischen Rufnummer erreichbar ist. Dies bedeutet, dass der Mobilfunkkunde, unabhängig von seinem aktuellen Aufenthaltsort und somit der aktiven Identifikation (Rufnummer), unter jeder der für ihn vorgesehenen Identifikationen (Rufnummern) erreichbar ist. Diese Verfahrensweise wird durch intelligente Steuerung von Rufumleitungen in den jeweiligen Netzen erreicht. Die Rufumleitungen aller involvierten Netze, außer des Netzes des aktuellen Aufenthaltsortes des Mobilfunkkunden, zeigen im immer auf die momentan aktive Identifikation (Rufnummer) des Mobilfunkkunden. Die Rufumleitungen sind bei jedem Wechsel der Identifikation des Kunden entsprechend neu zu setzen. Diese erneute Programmierung der Rufumleitung ist automatisch durch entsprechende intelligente Technologien vorzusehen, z.B. in einem IN Knoten.

Befindet sich der Mobilfunkkunde im Netz A und ist somit seine Identifikation (Rufnummer) für das Netz A aktiv, so kann der Kunde trotzdem unter seiner Identifikation (Rufnummer) des Netzes B erreicht werden. Im Netz B sind hierzu die Rufumleitungen auf die Identifikation (Rufnummer) A zu setzen. Wechselt der Kunde von Netz A nach Netz B, so sind die Rufumleitungen beider Netze A und B zu ändern

In einer weiteren Ausgestaltung der Erfindung ist in Bezug auf die Funktion Rufnummernanzeige (CLIP) des Mobilfunkkunden vorgesehen, dass abhängig von der Rufnummer, die der Mobilfunkkunde wählt, eine entsprechende Identifikation des Mobilfunkkunden an den Zielteilnehmer übermittelt wird. Dadurch wird sichergestellt, dass in jeden Netz bzw. Land immer die gleiche Rufnummer des Mobilfunkkunden angezeigt wird, unabhängig von der momentan aktiven Identifikation /Rufnummer des Kunden. Eine Implementierung dieser Funktion kann in intelligenten Netzknoten, z.B. in einem IN Knoten, erfolgen.

Der Mobilfunkkunde befindet sich im Netz B und somit ist seine Identifikation B aktiv. Wählt der Mobilfunkkunde ein Teilnehmer im Netz A an, so wird dem angerufenen Teilnehmer mittels CLIP die Identifikation A des Mobilfunkkunden übermittelt, obwohl der Mobilfunkkunde momentan die Identifikation B aktiviert hat.

Eine weitere Ausprägung der Erfindung ermöglicht, dass dem Mobilfunkkunden nur eine und immer die gleiche Mobilbox zugeordnet wird. In welchem Netz die Mobilbox eingerichtet und verwendet wird ist nicht von Belang. Vorzugsweise ist die Mobilbox jedoch im Heimatnetz des Mobilfunkkunden eingerichtet. Damit jeder Anrufer unabhängig vom aktuellen Aufenthaltsort und der aktuellen Identifikation die Mobilbox des Mobilfunkkunden erreicht, sind die Rufumleitungen in dem Netz des momentanen Aufenthaltsortes des Mobilfunkkunden auf die Mobilbox zu setzen. Beim Wechseln der Identifikation des Mobilfunkkunden sind die Rufumleitungen durch intelligente Funktionen automatisch neu zu programmieren.

Der Mobilfunkkunde befindet sich im Netz B und seine Identifikation B ist aktiv. Die Rufumleitungen im Netz B zeigen auf die Mobilbox des Mobilfunkkunden. Ein Anrufer aus Netz A wählt die Identifikation A des Mobilfunkkunden. Durch die Rufumleitungen im Netz A wird der Anruf in Netz B weitergeleitet. Im Netz B zeigen die Rufumleitungen auf die Mobilbox. Wechselt der Kunde vom Netz B in das Netz A müssen die Rufumleitungen im Netz A auf die Mobilbox geändert werden.

Weitere Merkmale der Erfindung ergeben sich aus den Zeichnungsfiguren.

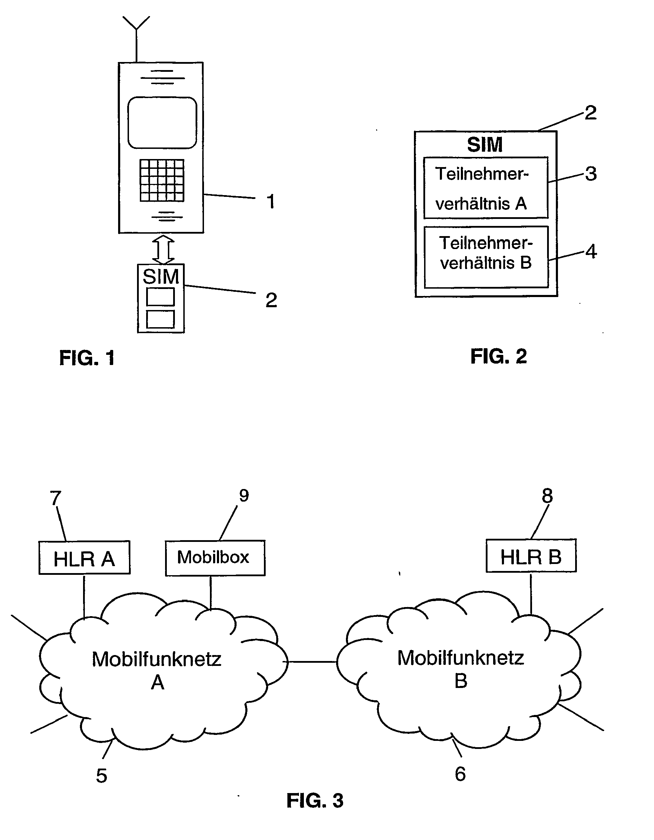

Figur 1 zeigt eine schematische Darstellung eines Mobilfunkendgeräts 1, das mit einer Smart Card 2 betrieben wird.
In Figur 2 ist dargestellt, dass auf der Smart Card 2 mindestens zwei Teilnehmerverhältnisse 3 und 4 definiert sind. Ein Teilnehmerverhältnis für ein Mobilfunknetz A und ein Teilnehmerverhältnis für ein Mobilfunknetz B.
In Figur 3 sind zwei Mobilfunknetze 5 und 6 (A und B) dargestellt, die jeweils über ein Heimatregister (HLR) 7 und 8 verfügen. Dem Teilnehmer ist in jedem Mobilfunknetz ein eigenes Teilnehmerverhältnis zugeordnet, dessen Teilnehmerprofil im jeweiligen HLR 7 bzw. 8 abgelegt ist. Der Teilnehmer verfügt jedoch nur über eine einzige Mobilbox 9, die beispielsweise im Mobilfunknetz A angeordnet ist und über beide Mobilfunknetze angesprochen werden kann.

## Patentansprüche

1. Verfahren zum Bereitstellen von netzbetreiberspezifischen Leistungsmerkmalen unterschiedlicher Mobilfunknetzbetreiber für einen Mobilfunkkunden, wobei der Mobilfunkkunde über eine Smart Card verfügt, auf der ein Teilnehmerverhältnis des Mobilfunkkunden in Bezug auf einen Mobilfunknetzbetreiber definiert ist, wobei auf der Smart Card (2) des Mobilfunkkunden mindestens zwei Teilnehmerverhältnisse (3; 4) mit unterschiedlichen Mobilfunkrufnummem und voneinander unabhängigen Leistungsmerkmalen definiert sind, und jedes Teilnehmerverhältnis jeweils einem Mobilfunknetzbetreiber zugeordnet ist,
**dadurch gekennzeichnet,**
**dass** eine intelligente Verwaltung und Steuerung von Rufumleitungen bei jedem für den Mobilfunkkunden vorgesehenen Mobilfunknetzbetreiber durchgeführt wird, derart, dass Rufe aller involvierten Mobilfunknetze, außer des Mobilfunknetzes des aktuellen Aufenthaltsortes des Mobilfunkkunden, immer auf die momentan aktive Identifikation und Rufnummer des Mobilfunkkunden umgeleitet werden, wobei die Rufumleitungen bei jedem Wechsel der Identifikation des Mobilfunkkunden entsprechend neu gesetzt werden und diese erneute Programmierung der Rufumleitung automatisch durch entsprechende intelligente Technologien erfolgt.

2. Verfahren nach Anspruch 1, **dadurch gekennzeichnet, dass** auf der SmartCard (2) den jeweiligen Teilnehmerverhältnissen (3; 4) zugeordnete SIM- und/oder USIM-Applikation vorhanden sind.

3. Verfahren nach einem der vorhergehenden Ansprüche, **dadurch gekennzeichnet, dass** für jedes vorhandene Teilnehmerverhältnis (3; 4) ein zugeordnetes Teilnehmerprofil in der Heimatdatenbank HLR (7; 8) des entsprechenden Mobilfunknetzbetreibers vorgesehen ist.

4. Verfahren nach einem der vorhergehenden Ansprüche, **dadurch gekennzeichnet, dass** durch intelligente Verwaltungs- und Steuerungsmechanismen sichergestellt wird, dass die bei der Funktion Rufnummernanzeige übertragene Mobilfunkrufnummer immer die für das jeweilige Zielland bzw. Zielnetz des Anrufes spezifische Mobilfunkrufnummer des Mobilfunkkunden verwendet wird, unabhängig von dem momentanen Standort des Mobilfunkkunden, wobei einem Zielteilnehmer immer die für das jeweilige Land oder Netz spezifische Mobilfunkrufnummer des Mobilfunkkunden signalisiert wird.

5. Verfahren nach einem der vorhergehenden Ansprüche, **dadurch gekennzeichnet, dass** dem Mobilfunkkunden nur eine Mobilbox (9) zugeordnet wird.

6. Verfahren nach einem der vorhergehenden Ansprüche, **dadurch gekennzeichnet, dass** die Rufumleitungen in dem Netz des momentanen Aufenthaltsortes des Mobiffunkkunden auf eine Mobilbox (9) gesetzt ist und bei einem Wechsel des Teilnehmerverhältnisses (3; 4) die Rufumleitungen durch intelligente Funktionen automatisch neu programmiert werden.

## Claims

1. Method for providing performance characteristics of different mobile communications network operators specific to a network operator for a mobile communications client, wherein the mobile communications client has at his disposal a smart card on which a subscriber relationship of the mobile communications customer with respect to a mobile communications network operator is defined, wherein on the smart card (2) of the mobile communications client at least two subscriber relationships (3; 4) having different mobile communications subscriber numbers and performance characteristics independent of one another are defined, and each subscriber relationship is associated with a mobile communications network operator, **characterised in that** intelligent administration and control of call diversions is carried out for each mobile communications network operator provided for the mobile communications client in such a way that calls of all mobile communications networks involved except for the mobile communications network of the current whereabouts of the mobile communications client are always diverted to the identification and subscriber number of the mobile communications client active at the time, wherein the call diversions are reset correspondingly on each change of identification of the mobile communications client and this renewed programming of call diversion ensues automatically by means of appropriate intelligent technologies.

2. Method according to claim 1, **characterised in that** SIM and/or USIM applications associated with the respective subscriber relationships (3; 4) are present on the smart card (2).

3. Method according to any of the preceding claims, **characterised in that** for each existing subscriber relationship (3; 4) an associated subscriber profile is provided in the home database HLR (7; 8) of the corresponding mobile communications network operator.

4. Method according to any of the preceding claims, **characterised in that** by means of intelligent administration and control mechanisms it is ensured that for the mobile communications subscriber number transmitted in the subscriber number display function the mobile communications number of the mobile communications client specific to the respective destination country or destination network of the call is always used regardless of the location at the time of the mobile communications client, wherein the mobile communications subscriber number of the mobile communications client specific to the respective country or network is always signalled to a target subscriber.

5. Method according to any of the preceding claims, **characterised in that** only one mobile box (9) is assigned to the mobile communications client.

6. Method according to any of the preceding claims, **characterised in that** the call diversions in the network of the present location of the mobile communications client are set to a mobile box (9) and in the event of a change in the subscriber relationship (3; 4) the call diversions are automatically reprogrammed by intelligent functions.

## Revendications

1. Procédé pour mettre à la disposition d'un client du réseau mobile des services de différents exploitants de réseaux radiotéléphoniques mobiles propres à un exploitant de réseau, étant précisé que le client mobile dispose d'une carte à mémoire sur laquelle est défini un abonnement du client mobile auprès d'un exploitant de réseau mobile, que sur la carte à mémoire (2) du client mobile sont définis au moins deux abonnements (3 ; 4) avec des numéros mobiles différents et des services indépendants les uns des autres, et que chaque abonnement est affecté à un exploitant de réseau mobile,
**caractérisé en ce qu'**une gestion et une commande intelligentes des transferts d'appels sont effectuées pour chaque exploitant de réseau mobile prévu pour le client mobile, de telle sorte que les appels de tous les réseaux mobiles impliqués, sauf le réseau de la position actuelle du client mobile, sont toujours transférés vers l'identification et le numéro d'appel momentanément actifs du client mobile, les transferts d'appels étant reprogrammés en conséquence à chaque changement de l'identification du client mobile et cette nouvelle programmation du transfert d'appels se faisant automatiquement grâce à des technologies intelligentes correspondantes.

2. Procédé selon la revendication 1, **caractérisé en ce qu'**il est prévu sur la carte intelligente (2) des applications SIM et/ou USIM associées aux abonnements (3 ; 4).

3. Procédé selon l'une des revendications précédentes, **caractérisé en ce qu'**il est prévu pour chaque abonnement existant (3 ; 4) un profil d'abonné associé dans l'enregistreur de localisation nominal HLR (7 ; 8) de l'exploitant de réseau mobile correspondant.

4. Procédé selon l'une des revendications précédentes, **caractérisé en ce que** les mécanismes de gestion et de commande intelligents garantissent que le numéro d'appel mobile qui est transmis avec la fonction d'affichage du numéro soit toujours le numéro mobile de l'abonné mobile qui est spécifique pour la région ou le réseau appelés, indépendamment de la position momentanée du client mobile, étant donné que c'est toujours le numéro mobile du client mobile spécifique pour la région ou le réseau qui est signalé à un abonné appelé.

5. Procédé selon l'une des revendications précédentes, **caractérisé en ce qu'**une seule messagerie mobile (9) est associée au client mobile.

6. Procédé selon l'une des revendications précédentes, **caractérisé en ce que** les transferts d'appels dans le réseau de la position momentanée du client mobile sont prévus vers une messagerie mobile (9), et en cas de changement de l'abonnement (3 ; 4) les transferts d'appels sont reprogrammés automatiquement grâce à des fonctions intelligentes.
